(19) Europäisches Patentamt
European Patent Office
Office européen des brevets

(11) **EP 2 207 306 A1**

(12) **EUROPEAN PATENT APPLICATION**
published in accordance with Art. 153(4) EPC

(43) Date of publication:
**14.07.2010 Bulletin 2010/28**

(51) Int Cl.:
***H04L 12/24*** *(2006.01)*

(21) Application number: **08856123.8**

(22) Date of filing: **20.11.2008**

(86) International application number:
**PCT/CN2008/073129**

(87) International publication number:
**WO 2009/071025 (11.06.2009 Gazette 2009/24)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 CN 200710178536**

(71) Applicant: **Huawei Technologies Co., Ltd.
Longgang District, Shenzhen
Guangdong 518129 (CN)**

(72) Inventor: **LI, Yan
Shenzhen
Guangdong 518129 (CN)**

(74) Representative: **Pfenning, Meinig & Partner GbR
Patent- und Rechtsanwälte
Theresienhöhe 13
80339 München (DE)**

(54) **A POLLING METHOD, SYSTEM, NETWORK MANAGEMENT STATION AND MANAGED DEVICE**

(57) The present invention discloses a polling method, a polling system, a network management workstation and a managed device, which are applicable to network management field. The method includes receiving, by a managed device, a request for acquiring data sent by a network management workstation, wherein the request for acquiring data includes a time parameter; collecting, by the managed device, data based on the time parameter after receiving the request; and sending the data to the network management workstation. The polling system includes a network management workstation and a managed device. The network management workstation includes a request sending module and a result receiving module. The managed device includes a request receiving module, a timer module, a data collecting module and a result sending module. According to the present invention, since a time parameter is added in the request message for acquiring data, a plurality of periodic replies can be obtained by sending only one request message. Thus, the number of request messages sent is reduced and the resource of network management workstation and the network bandwidth are saved.

ADD A TIME PARAMETER IN A NETCONF QUERY REQUEST MESSAGE AND SEND THE NETCONF QUERY REQUEST MESSAGE TO A MANAGED DEVICE — 101

THE MANAGED DEVICE PERFORMS REGULAR QUERY BASED ON THE RECEIVED QUERY REQUEST MESSAGE AND REPORTS THE REPLY MESSAGE TO THE NETWORK MANAGEMENT WORKSTATION — 102

FIG.1

**Description**

FIELD OF THE INVENTION

The present invention relates to network management field, and more specifically, to a polling method, a polling system, a network management workstation and a managed device.

BACKGROUND

In network management, there is a need to constantly monitor the status and performance of network devices. To achieve this end, generally, a polling technique is adopted. Polling refers to that a network management workstation periodically sends a query message to a managed device so that the network management workstation may periodically receive a reply message from the managed device. For instance, the network management workstation may periodically query for the number of Rx/Tx bytes of a network interface. In this way, the network management workstation may learn about the variation in network traffic in different time periods during a day. The sacrifice to make is that the network management workstation has to send a large amount of query messages to each managed device. When the number of devices monitored by network management workstation increases, the number of query messages sent also increases rapidly, and this consumes the resource and network bandwidth of the network management workstation.

Network Configuration Protocol (NETCONF) may be employed for conducting polling operation. The network management workstation periodically sends a <get> or <get-config> query request message to the managed devices. The message may include one or more variables to be queried for. The managed device queries the value of each variable and returns a query result in a <rpc-reply> message to the network management workstation. Both of the query request message and the reply message contain an ID "message-id" for matching a pair of request and reply.

The existing polling technique suffers from the following defects: each polling needs to send a request message, and the contents of these request messages are repetitive, which leads to a waste of the resource of the network management workstation and the network bandwidth.

SUMMARY

To save the resource of the network management workstation and the network bandwidth, a polling method, a polling system, a network management workstation and a managed device are provided according to various embodiments of the present invention.

The technical solutions according to embodiments of the present invention are as follows.

A polling method includes:

receiving, by a managed device, a request for acquiring data sent by a network management workstation, where the request for acquiring data comprises a time parameter; and
collecting, by the managed device, data based on the time parameter after receiving the request; and sending the data to the network management workstation.

A polling system includes:

a network management workstation, configured to send a request for acquiring data to a managed device, where the request for acquiring data comprises a time parameter;
and
a managed device, configured to receive the request, collect data based on the time parameter and send the data to the network management workstation.

A network management workstation includes:

a request sending module, configured to send a request for acquiring data to a managed device, where the request for acquiring data comprises a time parameter; and
a result receiving module, configured to receive the data sent by the managed device.

A managed device includes:

a request receiving module, configured to receive a request for acquiring data sent by a network management workstation, where the request for acquiring data comprises a time parameter;

a timer module, configured to set a timer based on the time parameter within the request and trigger a data collecting module regularly;

the data collecting module, configured to receive a trigger signal from the timer module, collect data and send the data to a result sending module; and

the result sending module, configured to receive the data sent by the data collecting module, and send the data to the network management workstation.

According to embodiments of the present invention, since a time parameter is added in the query message, a plurality of periodic replies can be obtained by sending only one request message. Thus, the number of request messages sent is reduced and the resource of network management workstation and the network bandwidth are saved.

BRIEF DESCRIPTION OF THE DRAWINGS

FIG. 1 is a flowchart of a polling method according to a first embodiment of the present invention;
FIG. 2 is a flowchart of a polling method according to a second embodiment of the present invention;
FIG. 3 is a flowchart of a polling method according to a third embodiment of the present invention; and
FIG. 4 is a diagram of a polling system according to a fourth embodiment of the present invention.

DETAILED DESCRIPTION

The purpose, technical solutions and advantages concerning the embodiments of the present invention will become more readily appreciated by reference to the following description of the embodiments, when taken in conjunction with the accompanying drawings.

Embodiment 1

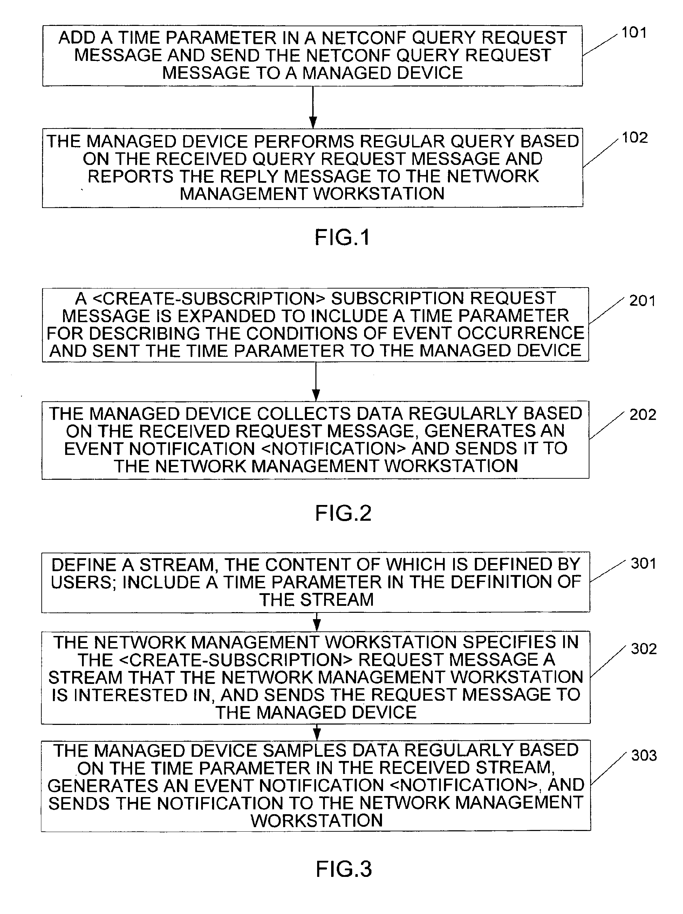

To reduce the number of requests sent and to save the resource of the network management workstation and the network bandwidth, a polling method is provided according to an embodiment of the present invention. The query request message of the network management workstation is expanded to include a new time parameter for describing requirements for data reply. As illustrated in FIG. 1, the method is described as follows.
Step 101: A time parameter is added in a NETCONF query request message and the NETCONF query request message is sent to a managed device.
Since the NETCONF adopts XML coding, the NETCONF query request message and the reply message have good extensibility. A skilled person may include a new parameter based on the standard protocol to implement its unique management function.
The time parameter may include the time when sampling begins (sampling begin time), the time when sampling ends (sampling end time) and the sampling interval.
The time parameters may convert with each other by simple formulas below. Therefore, the present invention is not limited to the form described in this step. Different combination of time parameters may be contemplated. For instance, the combination of begin time, sampling period and sampling times. The conversion formula is as follows.

$$\text{begin time} + \text{duration} = \text{end time}$$

$$\text{sampling period} * \text{sampling times} = \text{duration}$$

Some parameters may be optional. There is a special meaning in the absence of such parameter. For instance, the absence of the parameter of sampling begin time indicates that the polling starts immediately. The absence of the parameter of sampling end time indicates that the polling would never end automatically unless it is terminated manually.
In an embodiment of the present invention, a query of the performance data of interface eth0 is given by way of example. The detailed query request may be expressed as follows.

```
<rpc message-id="101" xmlns="urn:ietf:params:xml:ns:netconf:base:1.0">
    <get>
        <sample-begin>2007-07-01T00:00:00Z</sample-begin>
        <sample -end>2007-07-02 T00:00:00Z</sample-end>
        <sample-interval>60</sample-interval>
        <filter type="subtree">
            <t:top xmlns:t="http://example.com/schema/1.2/stats">
                <t:interfaces>
                    <t:interface t:ifName="eth0"/>
                </t:interfaces>
            </t:top>


            </filter>
        </get>
    </rpc>
```

where \<sample-begin\> indicates the sampling begin time.

\<sample-end\> indicates the sampling end time.

\<sample-end\> indicates the sampling interval (in the unit of second).

In the above request, a time parameter is included in the NETCONF \<get\> operation. The time parameter is used to describe the time requirement of data reply.

The request message indicates that a reply is sent every 60 seconds from 00:00, July 1, 2007 to 00:00 next day.

The time parameter can also apply to a \<get-config\> operation. That is, the query message may be in the form of a \<get-config\> operation. The form, content and reply of a \<get-config\> operation are similar to that of the \<get\> operation, which is omitted herein for brevity.

Step 102: The managed device performs regular query based on the received query request message and reports the reply message to the network management workstation.

In this step, after the managed device receives the request message, the managed device sets the sampling begin time and the sampling end time of a timer based on the query request message. The query is performed every sampling interval. And, the managed device may report a query result to the network management workstation by a \<rpc-reply\> and identify every reply. The \<rpc-reply\> replied by the managed device is as follows.

```
<rpc-reply message-id="101" xmlns="urn:ietf:params:xml:ns:netconf:base:1.0"
         sample-id="n">
    <data>
      <t:top xmlns:t="http://example.com/schema/1.2/stats">
        <t:interfaces>
          <t:interface t:ifName="eth0">
            <t:ifInOctets>45621</t:ifInOctets>
            <t:ifOutOctets>774344</t:ifOutOctets>
          </t:interface>
        </t:interfaces>
      </t:top>
    </data>


  </rpc-reply>
```

In the <rpc-reply>, the message-id is still used to match the relation between a query and a reply. In addition, a new attribute "sample-id" is included for identifying a reply in the polling process.

According to the embodiments of the present invention, since a time parameter is added in a query request message, a plurality of periodic replies can be obtained by sending only one request message. Thus, the number of the query request messages sent is reduced and the resource of network management workstation and the network bandwidth are saved.

Embodiment 2

In this embodiment of the present invention, the network management workstation may obtain the data of a managed device by way of an event notification subscription mechanism. The network management workstation may first send a <create-subscription> request message to the managed device. The request message describes which events the network management workstation is interested in. This request message also specifies the condition of event occurrence by virtue of a time parameter. The managed device notifies the network management workstation of the data requested by the network management workstation in the form of a <notification>, rather than the <rpc-reply> illustrated in the embodiment 1. As illustrated in FIG. 2, the method is described as follows.

Step 201: A <create-subscription> subscription request message is expanded to include a time parameter for describing the conditions of event occurrence and is sent to the managed device.

In the time parameter, the condition of an event occurrence includes the event begin time, the time when the sending of the event notification is terminated and the interval between two events occurrence. Variations in the time parameters are similar to the embodiment 1, which is omitted herein for brevity.

A query for the performance data of the interface eth0 is given by way of example.
The <create-subscription> request message is as follows.

```
<netconf:rpc netconf:message-id="101"
        xmlns:netconf="urn:ietf:params:xml:ns:netconf:base:1.0">
    <create-subscription
xmlns="urn:ietf:params:netconf:capability:notification:1.0">
        <sample-begin>2007-07-01T00:00:00Z</sample-begin>
        <sample-end>2007-07-02 T00:00:00Z</sample-end>




        <sample-interval>60</sample-interval>
        <filter netconf:type="subtree">
            <t:top xmlns:t="http://example.com/schema/1.2/stats">
                <t:interfaces>
                    <t:interface t:ifName="eth0"/>
                </t:interfaces>
            </t:top>
        </filter>
    </create-subscription>
</netconf:rpc>
```

In an embodiment of the present invention, the <create-subscription> request message requires to send a notification message relating to the performance data of the interface eth0. The notification is sent every 60 seconds from 00:00, July 1, 2007 to 00:00 next day.

Step 202: The managed device collects data regularly based on the received request message and generates an event notification <notification> and sends it to the network management workstation.

In this step, after the managed device receives the request message, the managed device sets a begin time and an end time of a timer based on the request message and triggers sampling every sampling interval. And, the managed device may report the sampling result to the network management workstation by the <notification>.

Preferably, the managed device may timely report the sampling result to the network management workstation after sampling. In addition, the managed device may also report the sampling result to the network management workstation in a predetermined time period. The predetermined time period may be carried in the request message or may be agreed in advance between the network management workstation and the managed device.

The form of the <notification> is as follows.

```
<notification xmlns="urn:ietf:params:netconf:capability:notification:1.0">
    <t:top xmlns:t="http://example.com/schema/1.2/stats">
        <t:interfaces>
            <t:interface t:ifName="eth0">
                <t:ifInOctets>45621</t:ifInOctets>
                <t:ifOutOctets>774344</t:ifOutOctets>
            </t:interface>



        </t:interfaces>
    </t:top>
</notification>
```

A skilled person may establish a subscription on each NETCONF session. Thus, different sessions can be used to distinguish which subscription request message the received event notification belongs to.

According to the technical solutions of the embodiments of the present invention, a <create-subscription> request message is expanded to include a time parameter in the <create-subscription> request message, and the time parameter specifies the condition of event occurrence. Therefore, the network management workstation may receive the notification message periodically according to the time parameter.

Embodiment 3

A stream-based event notification subscription mechanism is provided according to an embodiment of the present invention. The so-called stream is a group of related event notifications. The content of the stream may be defined by users. The network management workstation specifies in the <create-subscription> request message the stream that the network management workstation is interested in. A skilled person may define an event stream for a monitored variable. The definition of the event stream includes a time parameter. A normal <create-subscription> operation (without any expansion) is then employed to subscribe to this stream. As illustrated in FIG. 3, the method is described as follows.

Step 301: A group of related event notifications are set up. In other words, a stream is defined. The content of the stream is defined by users. Time parameters, i.e., event begin time, the time when the sending of the event notification is terminated and the interval between two events, are included in the definition of the stream.

Step 302: The network management workstation specifies in the <create-subscription> request message a stream that the network management workstation is interested in, and sends the <create-subscription> request message including the stream to the managed device where the <create-subscription> request message including the stream is not expanded.

The format of the <create-subscription> request message is describes as follows.

```
<netconf:rpc netconf:message-id="101"
    xmlns:netconf="urn:ietf:params:xml:ns:netconf:base:1.0">
```

```
<create-subscription
xmlns="urn:ietf:params:netconf:capability:notification:1.0">
    <stream>PollingEth0</stream>
</create-subscription>
</netconf:rpc>
```

where the <stream> parameter specifies that the stream of interest is a "PollingEth0" stream.

Step 303: The managed device samples data based on the received request message and the time parameter in the stream and notifies the network management workstation of the result of sampling in the form of <notification>.
The <notification> replied by the managed device according to the request message is identical to that in step 202 of the embodiment 2, which is omitted herein for brevity.
According to the embodiments of the present invention, a time parameter is included in the definition of the event stream and a normal <create-subscription> operation (without any expansion) is employed to subscribe to this stream. The network management workstation may receive the notification message periodically according to the time parameter.

Embodiment 4

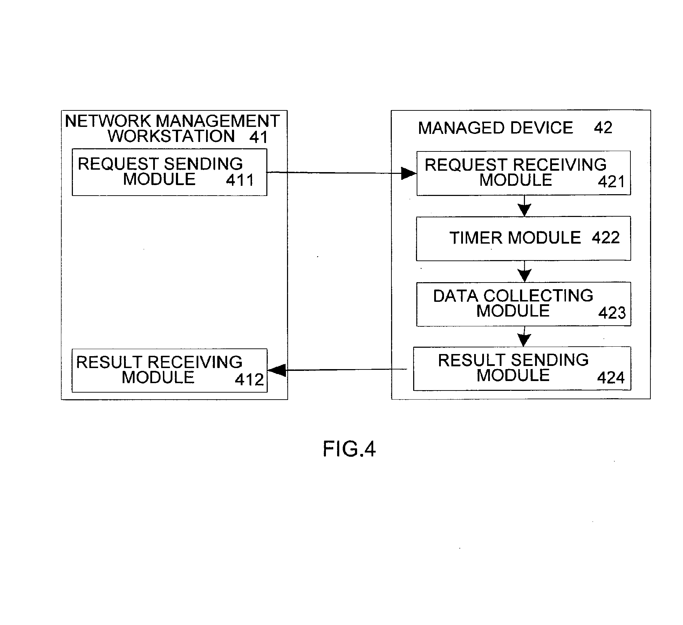

A polling system is provided according to an embodiment of the present invention. As illustrated in FIG. 4, the system may include:

a network management workstation 41, configured to send a request for acquiring data to a managed device 42, where the request for acquiring data includes a time parameter;
a managed device 42, configured to receive the request for acquiring data, collect data according to the time parameter and send the data to the network management workstation 41.

The network management workstation 41 includes:

a request sending module 411, configured to send the request for acquiring data to the managed device 42, where the request for acquiring data includes the time parameter;
a result receiving module 412, configured to receive the data sent by the managed device 42;

The request sending module 411 may be the following modules depending on the type of sent request for acquiring data:

a query request sending module, configured to send the request for acquiring data to the managed device via a data query operation, where the request for acquiring data includes a time parameter;
a subscription request sending module, configured to send the request for acquiring data to the managed device via an event subscription operation, where the request for acquiring data directly includes a time parameter;
an event stream subscription request sending module, configured to send the request for acquiring data to the managed device via an event subscription operation, where the request for acquiring data includes an identifier for the event stream and the definition of the event stream includes a time parameter.

The managed device 42 includes:

a request receiving module 421, configured to receive the request for acquiring data sent by the network management workstation 41, where the request for acquiring data includes a time parameter;
a timer module 422, configured to set a timer based on the time parameter within the request for acquiring data and trigger a data collecting module 423 regularly;
the data collecting module 423, configured to receive a trigger signal sent from the timer module 422, collect data and send the collected data to a result sending module 424; and

the result sending module 424, configured to receive the data sent by the data collecting module 423, and send the data to the network management workstation 41.

According to technical solutions of the embodiments of the present invention, a plurality of periodic replies can be obtained by sending only one request message. Thus, the number of request messages sent is reduced and the resource of network management workstation and the network bandwidth are saved.

The foregoing are merely preferred embodiments of the present invention, which shall not be construed as limitation to the present invention. Any modifications, equivalents, improvements, etc., made within the principle of the present invention fall within the scope of the present invention.

**Claims**

1. A polling method, **characterized by** comprising:

   receiving, by a managed device, a request for acquiring data sent by a network management workstation, wherein the request for acquiring data comprises a time parameter;
   collecting, by the managed device, data based on the time parameter after receiving the request; and sending the data to the network management workstation.

2. The method of claim 1, **characterized in that**, the time parameter comprises one or more of: interval time, begin time and end time.

3. The method of claim 2, **characterized in that**, sending the data to the network management workstation by the managed device based on the time parameter comprises:

   sampling, by the managed device, the data at intervals of the interval time since the begin time and sending the collected data to the network management workstation until the end time.

4. The method of any one of claims 1-3, **characterized in that**, the request for acquiring data is a data query operation.

5. The method of any one of claims 1-3, **characterized in that**, the request for acquiring data is an event subscription operation which directly comprises the time parameter.

6. The method of any one of claims 1-3, **characterized in that**, the request for acquiring data is an event subscription operation and the event subscription operation comprises an identifier for an event stream, wherein the definition of the event stream comprises the time parameter.

7. A polling system, **characterized by** comprising:

   a network management workstation, configured to send a request for acquiring data to a managed device, wherein the request for acquiring data comprises a time parameter; and
   a managed device, configured to receive the request, collect data based on the time parameter and send the data to the network management workstation.

8. The system of claim 7, **characterized in that**, the network management workstation comprises:

   a request sending module, configured to send the request for acquiring data to the managed device, wherein the request for acquiring data comprises the time parameter; and
   a result receiving module, configured to receive the data sent by the managed device.

9. The system of claim 7, **characterized in that**, the managed device comprises:

   a request receiving module, configured to receive the request for acquiring data sent by the network management workstation, wherein the request for acquiring data comprises the time parameter;
   a timer module, configured to set a timer based on the time parameter within the request and trigger a data collecting module regularly;
   the data collecting module, configured to receive a trigger signal from the timer module, collect data and send the data to a result sending module; and
the result sending module, configured to receive the data sent by the data collecting module, and send the data to the network management workstation.

10. A network management workstation, **characterized by** comprising:

a request sending module, configured to send a request for acquiring data to a managed device, wherein the request for acquiring data comprises a time parameter; and
a result receiving module, configured to receive the data sent by the managed device.

11. The network management workstation of claim 10, **characterized in that**, the request sending module is a query request sending module, configured to send the request for acquiring data to the managed device via a data query operation, wherein the request for acquiring data comprises a time parameter.

12. The network management workstation of claim 10, **characterized in that**, the request sending module is a subscription request sending module, configured to send the request for acquiring data to the managed device via an event subscription operation, wherein the request for acquiring data directly comprises a time parameter.

13. The network management workstation of claim 10, **characterized in that**, the request sending module is an event stream subscription request sending module, configured to send the request for acquiring data to a managed device via an event subscription operation, wherein the request for acquiring data comprises an identifier for an event stream and the definition of the event stream comprises a time parameter.

14. A managed device, **characterized by** comprising:

a request receiving module, configured to receive a request for acquiring data sent by a network management workstation, wherein the request for acquiring data comprises a time parameter;
a timer module, configured to set a timer based on the time parameter within the request and trigger a data collecting module regularly;
the data collecting module, configured to receive a trigger signal from the timer module, collect data and send the data to a result sending module; and
the result sending module, configured to receive the data sent by the data collecting module, and send the data to the network management workstation.

| ADD A TIME PARAMETER IN A NETCONF QUERY REQUEST MESSAGE AND SEND THE NETCONF QUERY REQUEST MESSAGE TO A MANAGED DEVICE | 101 |

| THE MANAGED DEVICE PERFORMS REGULAR QUERY BASED ON THE RECEIVED QUERY REQUEST MESSAGE AND REPORTS THE REPLY MESSAGE TO THE NETWORK MANAGEMENT WORKSTATION | 102 |

## FIG.1

| A <CREATE-SUBSCRIPTION> SUBSCRIPTION REQUEST MESSAGE IS EXPANDED TO INCLUDE A TIME PARAMETER FOR DESCRIBING THE CONDITIONS OF EVENT OCCURRENCE AND SENT THE TIME PARAMETER TO THE MANAGED DEVICE | 201 |

| THE MANAGED DEVICE COLLECTS DATA REGULARLY BASED ON THE RECEIVED REQUEST MESSAGE, GENERATES AN EVENT NOTIFICATION <NOTIFICATION> AND SENDS IT TO THE NETWORK MANAGEMENT WORKSTATION | 202 |

## FIG.2

| DEFINE A STREAM, THE CONTENT OF WHICH IS DEFINED BY USERS; INCLUDE A TIME PARAMETER IN THE DEFINITION OF THE STREAM | 301 |

| THE NETWORK MANAGEMENT WORKSTATION SPECIFIES IN THE <CREATE-SUBSCRIPTION> REQUEST MESSAGE A STREAM THAT THE NETWORK MANAGEMENT WORKSTATION IS INTERESTED IN, AND SENDS THE REQUEST MESSAGE TO THE MANAGED DEVICE | 302 |

| THE MANAGED DEVICE SAMPLES DATA REGULARLY BASED ON THE TIME PARAMETER IN THE RECEIVED STREAM, GENERATES AN EVENT NOTIFICATION <NOTIFICATION>, AND SENDS THE NOTIFICATION TO THE NETWORK MANAGEMENT WORKSTATION | 303 |

## FIG.3

FIG.4

# INTERNATIONAL SEARCH REPORT

| International application No. |
|---|
| PCT/CN2008/073129 |

| A. CLASSIFICATION OF SUBJECT MATTER |
|---|
| H04L12/24 (2006.01) i |
| According to International Patent Classification (IPC) or to both national classification and IPC |

| B. FIELDS SEARCHED |
|---|
| Minimum documentation searched (classification system followed by classification symbols) |
| IPC: H04L12/- |
| Documentation searched other than minimum documentation to the extent that such documents are included in the fields searched |
| Electronic data base consulted during the international search (name of data base and, where practicable, search terms used) |
| CPRS, CNKI, WPI, EPODOC, PAJ: poll+，network w management，period/time，collect+/sampl+，request，repons+/answer/reply |

| C. DOCUMENTS CONSIDERED TO BE RELEVANT |
|---|

| Category* | Citation of document, with indication, where appropriate, of the relevant passages | Relevant to claim No. |
|---|---|---|
| X | CN1545260A (ZTE CORP) 10 Nov. 2004 (10.11.2004)see the abstract, page 1 paragraph 4 – page 2 paragraph 1 in the description, fig. 1 | 1-14 |
| A | JP2002171262A (FURUKAWA ELECTRIC CO LTD) 14 Jun. 2002(14.06.2002) see the whole document | 1-14 |
| A | US6775699B1 (MICROSOFT CORP) 10 Aug. 2004(10.08.2004) see the whole document | 1-14 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 Feb. 2009 (09.02.2009) | **26 Feb. 2009 (26.02.2009)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer ZHANG Yanqing Telephone No. (86-10)62411428 |

Form PCT/ISA/210 (second sheet) (April 2007)

## INTERNATIONAL SEARCH REPORT
Information on patent family members

| | International application No. |
|---|---|
| | PCT/CN2008/073129 |

| Patent Documents referred in the Report | Publication Date | Patent Family | Publication Date |
|---|---|---|---|
| CN1545260A | 10.11.2004 | CN100373871C | 05.03.2008 |
| JP2002171262A | 14.06.2002 | None | |
| US6775699B1 | 10.08.2004 | US2005005011A | 06.01.2005 |

Form PCT/ISA/210 (patent family annex) (April 2007)